# EUROPÄISCHE PATENTSCHRIFT

(11) **EP 1 931 548 B1**
(45) Veröffentlichungstag und Bekanntmachung des Hinweises auf die Patenterteilung: **30.05.2012**
(21) Anmeldenummer: 06793541.1
(22) Anmeldetag: 15.09.2006
(51) Int. Cl.: B60T 8/36

(54) **VERFAHREN ZUM BETREIBEN EINES BREMSSYSTEMS FÜR KRAFTFAHRZEUGE**
METHOD FOR OPERATING A BRAKING SYSTEM FOR MOTOR VEHICLES
PROCEDE POUR FAIRE FONCTIONNER UN SYSTEME DE FREINAGE POUR VEHICULES AUTOMOBILES

(30) Priorität: 29.09.2005 DE 102005046652
(43) Veröffentlichungstag der Anmeldung: 18.06.2008
(73) Patentinhaber: ROBERT BOSCH GMBH, 70442 Stuttgart (DE)
(72) Erfinder: HECKMANN, Hans, 76227 Karlsruhe (DE); KOLARSKY, Jens, 74321 Bietigheim/Bissingen (DE); HERMANN, Harald, 71292 Friolzheim (DE); JAHNZ, Timo, 74354 Besigheim (DE); FOERCH, Dirk, 74196 Neuenstadt/Stein (DE); QUIRANT, Werner, 71717 Beilstein (DE); KUNZ, Michael, 70839 Gerlingen (DE); BUNK, Michael, 74072 Heilbronn (DE); GRELL, Philipp, 74321 Bietigheim-Bissingen (DE); LOEFFLER, Thomas, 74182 Obersulm (DE)
(86) Internationale Anmeldenummer: PCT/EP2006/066390
(87) Internationale Veröffentlichungsnummer: WO 2007/036438

(56) Entgegenhaltungen:
- DE-A1- 10 059 348
- DE-A1- 10 163 524
- US-A- 5 971 503

## Beschreibung

### Stand der Technik

Die Erfindung betrifft ein Verfahren zum Betreiben eines Bremssystems für Kraftfahrzeuge mit elektrisch ansteuerbaren Hydraulikventilen gemäß der im Oberbegriff des Patentanspruches 1 näher definierten Art.

Aus der Praxis bekannte Bremssysteme weisen neben komfortorientierten Funktionen auch sicherheitsrelevante Betriebsstrategien auf, welche mit so genannten ABS-Systemen oder ESP-Aggregaten zur Verfügung gestellt werden. Insbesondere bei eine Fahrstabilität eines Fahrzeugs stabilisierenden bremssystemseitigen Bremseingriffen sind nach Erkennen einer sicherheitskritischen Fahrsituation kurze Reaktionszeiten erforderlich, welche in Abhängigkeit der jeweiligen Druckaufbaudynamik eines Bremssystems stehen.

Die Druckaufbaudynamik eines Bremssystems wird bei sehr niedrigen Umgebungstemperaturen eines Fahrzeugs durch eine erhöhte Viskosität der Bremsflüssigkeit eines Bremssystems derart stark beeinträchtigt, dass ausreichend kurze Reaktionszeiten eines Bremssystems nur schwer umsetzbar sind, da durch die erhöhte Viskosität der Bremsflüssigkeit im Hydrauliksystem eines Bremssystems hohe Druckverluste auftreten.

Aus der US 5,971,503 ist ein hydraulisches Steuersystem mit einer Hydraulikpumpe und einer in Abhängigkeit eines Hydraulikdrucks betätigbaren Einrichtung bekannt. Das Steuersystem umfasst Hydraulikleitungen, Hydraulikventile und einen elektronischen Steuerkreis zum Bestromen der Hydraulikventile, um im Bereich der Hydraulikventile durch die Bestromung ein im Bremssystem befindliches Hydraulikfluid zu erwärmen, falls dieses eine eine Druckaufbaudynamik beeinträchtigende Viskosität aufweist.

Nachteilig dabei ist jedoch, dass die Hydraulikventile derart bestromt werden, dass diese einen zu einem stromlosen Schaltzustand äquivalenten Betriebszustand während einer Erwärmungsphase des Hydraulikfluids des Bremssystems nicht verlassen und die Erwärmung des Hydraulikfluids nur mit einer geringen Heizleistung durchgeführt wird, wodurch eine Druckaufbaudynamik des Bremssystems erst nach unerwünscht langer Zeit verbessert wird.

Bei dem aus der DE 101 63 524 A1 bekannten Verfahren zur Ansteuerung einer Bremsvorrichtung für Kraftfahrzeuge mit elektrisch ansteuerbaren Hydraulikventilen und einer Hydraulikpumpe werden eine oder mehrere vorhandene, für hydraulische Steuerungsfunktionen notwendige Ventilspulen zwecks einer elektrischen Beheizung eines oder mehrerer, diese Spulen aufnehmender Träger, für längere Zeiträume, als es für die Regelfunktion notwendig ist und/oder in Zeiträumen, in denen es für die Regelungsfunktionen nicht notwendig ist, mit Stromstärken angesteuert, die geeignet sind, das jeweilige Ventil, wenn es stromlos geschlossen ist, zu öffnen, bzw. wenn es stromlos geöffnet ist, zu schließen.

Bei diesem Verfahren werden die Hydraulikventile mit höheren Stromstärken bestromt als bei dem aus der US 5,971,503 bekannten Verfahren. Damit wird das Hydraulikfluid der Bremsvorrichtung schneller in Richtung einer Temperatur erwärmt, bei der das Hydraulikfluid eine Viskosität aufweist, die eine bessere Druckaufbaudynamik eines Bremssystems ermöglicht.

Dabei ist es vorgesehen, dass das Hydraulikfluid der Bremsvorrichtung zunächst während einer ersten Heizphase erwärmt wird, welche einen ersten Heizimpuls gefolgt von einer Heizpause und mindestens einen weiteren Heizimpuls umfasst, wobei nach der ersten Heizphase mindestens eine Temperaturmessung durchgeführt wird, und wobei insbesondere innerhalb der Heizphasen keine Temperaturmessung durchgeführt wird. Zudem ist es vorgesehen, dass zweite oder weitere Heizphasen erst oder nur dann gestartet werden, wenn die durch einen Temperatursensor gemessene Temperatur unterhalb einer vorgegebenen Schwellentemperatur liegt.

Nachteilig dabei ist jedoch, dass eine direkte Messung der Temperatur der Hydraulikflüssigkeit des Bremssystems im Bereich von Hydraulikventilen eines Bremssystems einen hohen aparativen Aufwand erfordert und daher hohe Kosten verursacht.

Zur Verringerung der Kosten zur Temperaturbestimmung des Hydraulikfluids besteht beispielsweise die Möglichkeit, eine zu der Temperatur des Hydraulikfluids im Bereich der zur Erwärmung des Hydraulikfluids bestromten Hydraulikventilen äquivalente Größe messtechnisch im Betrieb des Bremssystems zu bestimmen. Hierzu besteht beispielsweise die Möglichkeit, einen bereits im Bremssystem vorhandenen Temperatursensor zu verwenden, der möglichst nahe am Hydraulikblock der Bremsvorrichtung positioniert ist.

Eine derartige Temperaturbestimmung wird jedoch nachteilhafterweise durch eine im Betrieb der Bremsvorrichtung auftretende Wärmeentwicklung im Bereich des elektrischen Steuergerätes der Bremsvorrichtung beeinflusst. Dies resultiert aus der Tatsache, dass die Temperaturermittlung mittels des bereits im Bremssystem vorhandenen Temperatursensors durch den im Betrieb auftretenden Temperaturanstieg im Bereich des Steuergerätes, der keine nennenswerte Erwärmung des Hydraulikfluids bewirkt, unter Umständen in derartigem Umfang beeinflusst wird, dass das Hydraulikfluid aufgrund eines verfälschten Messergebnisses nicht in der zur Verbesserung der Druckaufbaudynamik der Bremsvorrichtung erforderlichen Art und Weise erwärmt wird, da die über den Temperatursensor ermittelte Temperatur bei weitem nicht der Temperatur des Hydraulikfluids entspricht und die Beheizung des Bremssystems beendet wird, obwohl das Hydraulikfluid nach wie vor eine Temperatur aufweist, die eine Druckaufbaudynamik des Bremssystems verschlechtert.

Die DE 100 59 348 A1 zeigt ein Verfahren zur Ansteuerung einer Bremsvorrichtung zu elektrische Beheizung der Hydraulikflüssigkeit durch gezielte Ansteuerung der Ventilspulen nach dem Oberbegriff des Anspruchs 1 Hierzu werden verschiedene Heizstrategien vorgestellt.

Der vorliegenden Erfindung liegt daher die Aufgabe zugrunde, ein Verfahren zum Betreiben eines Bremssystems für Kraftfahrzeuge mit elektrisch ansteuerbaren Hydraulikfluiden zur Verfügung zu stellen, mittels welchem die Druckaufbaudynamik eines Bremssystems auf einfache und kostengünstige Art und Weise durch eine effiziente Erwärmung der Hydraulikflüssigkeit verbesserbar ist.

Erfindungsgemäß wird diese Aufgabe durch ein Verfahren zum Betreiben eines Bremssystems mit den Merkmalen des Anspruchs 1 gelöst.

### Vorteile der Erfindung

Bei dem erfindungsgemäßen Verfahren zum Betreiben eines Bremssystems für Kraftfahrzeuge mit elektrisch ansteuerbaren Hydraulikventilen werden Spulen der Hydraulikventile zur Erwärmung des im Hydrauliksystem des Bremssystems befindlichen Hydraulikfluids wenigstens phasenweise mit einen stromlosen Schaltzustand der Hydraulikventile verändernden Strömen bestromt, wobei die Erwärmung des Hydraulikfluids bei Vorliegen einer Hydraulikfluidtemperatur kleiner als ein Schwellwert gestartet wird.

Erfindungsgemäß wird das Hydraulikfluid über ein in Abhängigkeit einer eine Erwärmungsphase des Hydraulikfluids auslösende Hydraulikfluidtemperatur stehendes Heizprofil erwärmt, welches aus einer ersten Heizphase und einer sich daran anschließenden zweiten Heizphase besteht, wobei die Spulen während der ersten Heizphase derart bestromt werden, dass eine Spulentemperatur am Ende der ersten Heizphase jeweils einem vordefinierten Spulentemperaturwert entspricht, der während der zweiten Heizphase mittels einer Bestromung der Spulen wenigstens annähernd gehalten wird.

Die erfindungsgemäße Vorgehensweise, bei der die Hydraulikventile ihre Schaltstellung ändern, wird eine Druckaufbaudynamik eines Bremssystems eines Kraftfahrzeuges im Vergleich zu einem Bremssystem, welches gemäß der in der US 5,971,503 vorgeschlagenen Art und Weise betrieben wird, innerhalb kürzerer Zeit verbessert.

Zusätzlich wird die Druckaufbaudynamik eines. Bremssystems mit der erfindungsgemäßen Vorgehensweise mit einer Heizleistung durchgeführt, ohne die durch die Bestromung der Spulen der Hydraulikventile mit thermischer Energie beaufschlagten Bauteile, d. h. die Ventilendstufen der Hydraulikventile, in einer die Funktionsweise des Bremssystems beeinträchtigenden Art und Weise nachteilig zu beeinflussen bzw. zu schädigen.

Die Durchführung der Erwärmungsphase des Hydraulikfluids mit einem in Abhängigkeit der die Erwärmungsphase des Hydraulikfluids auslösenden Hydraulikfluidtemperatur stehenden Heizprofil, das eine erste Heizphase und eine sich daran anschließende zweite Heizphase aufweist, bietet die Möglichkeit, das Bremssystemund damit das Hydraulikfluid im Bereich der Hydraulikventile während der ersten Heizphase innerhalb kurzer Zeit zu erwärmen. Während der zweiten sich daran anschließenden Heizphase wird dem Bremssystem weiterhin thermische Energie zugeführt. Dies erfolgt ohne Unterbrechung der Bestromung der Spulen der Hydraulikventile mit im Vergleich zur ersten Heizphase geringerer Heizleistung, ohne die Bauteile zu überlasten. Dadurch wird das Hydraulikfluid in der für die Verbesserung der Druckaufbaudynamik erforderlichen Art und Weise bauteilschonend temperiert.

Des Weiteren bietet das erfindungsgemäße Verfahren auf einfache Art und Weise die Möglichkeit, auf eine Bestimmung der Temperatur des Hydraulikfluids im Bereich der Hydraulikventile, die hohe Kosten verursacht und die aufgrund sich im Betrieb des Bremssystems erwärmender Bauteile verfälscht wird, zu verzichten, da das Hydraulikfluid jeweils mit in Abhängigkeit der zum Start der Erwärmungsphase des Hydraulikfluids aktuellen Hydraulikfluidtemperatur stehenden Heizprofilen, die applikativ ermittelt sind, erwärmt wird, ohne unzulässige Bauteilbelastungen von temperaturempfindlichen Komponenten des Bremssystems zu erhalten.

Die Hydraulikventile können während der ersten Heizphase mit derartigen Stromwerten bestromt werden, dass sowohl die Temperatur der Bauteile des Bremssystems als auch die Temperatur des Hydraulikfluids einen annähernd linearen Anstieg aufweisen. Mit Erreichen einer die Bauteile des Bremssystems jeweils nicht schädigenden Bauteiltemperatur wird die zweite Heizphase der Erwärmungsphase des Hydraulikfluids gestartet, die eine sogenannte Beharrungsphase darstellt und während der die Spulen der Hydraulikfluide mit derartigen Stromstärken bestromt werden, dass die am Ende der ersten Heizphase vorliegende Bauteiltemperatur der temperaturempfindlichen Bauteile des Systems gehalten wird und die Temperatur des Hydraulikfluids schnell auf die für eine gute Druckaufbaudynamik des Bremssystems erforderliche Temperatur angehoben wird.

Weitere Vorteile und vorteilhafte Ausgestaltungen des Gegenstandes nach der Erfindung sind der Beschreibung, der Zeichnung und den Patentansprüchen entnehmbar.

### Zeichnung

Eine Variante des erfindungsgemäßen Verfahrens ist in der Zeichnung in Form eines Blockschaltbildes schematisch vereinfacht wiedergegeben und wird in der nachfolgenden Beschreibung näher erläutert. Es zeigt:
- Figur 1: ein Schaltschema eines Bremssystems, welches erfindungsgemäß betrieben wird; und
- Figur 2: ein stark verkürztes Ablaufschema des erfindungsgemäßen Verfahrens.

### Beschreibung des Ausführungsbeispiels

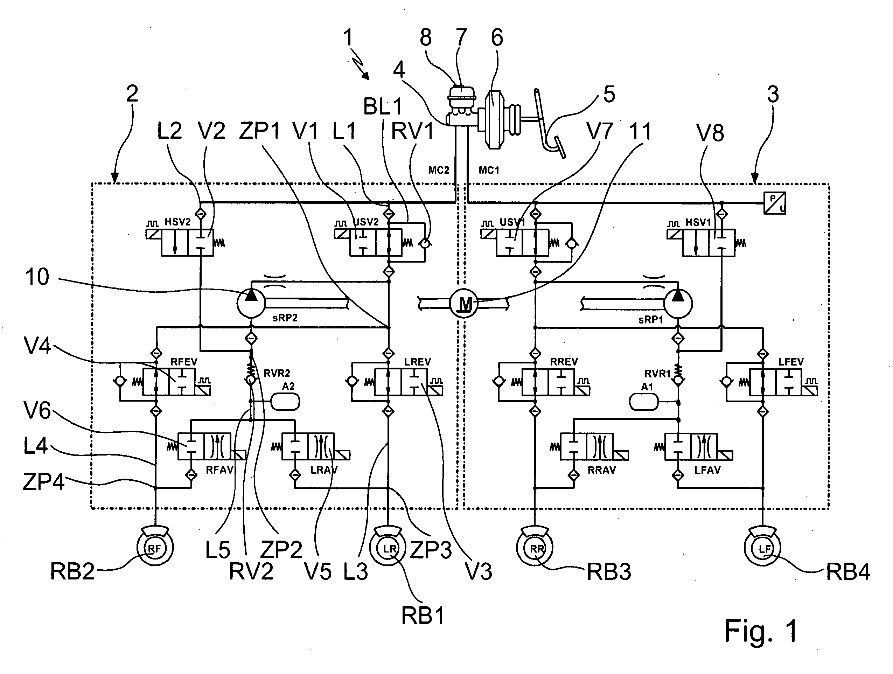

Figur 1 zeigt ein Schaltschema eines mit Hydraulikventilen ausgeführten Bremssystems 1 bzw. eines Bremsdruckregelsystems eines Fahrzeugs, vorzugsweise eines TCS- oder eines ESP-Systems, welches einen ersten Druckkreis 2 und einen davon getrennten zweiten Druckkreis 3 umfasst. Die Druckkreise 2 und 3 sind identisch aufgebaut, weshalb bei der Erläuterung der Funktionalitäten der Bauteile der Druckkreise 2 und 3 in der nachfolgenden Beschreibung im Wesentlichen lediglich auf den ersten Druckkreis 2 näher Bezug genommen wird.

Die beiden Druckkreise 2 und 3 sind vorliegend mit einem Hauptbremszylinder 4 verbunden und werden ausgehend von dem Hauptbremszylinder 4 in Abhängigkeit einer fahrerseitigen Betätigung eines Bremspedals 5 mit einem über einen Bremskraftverstärker 6 in an sich bekannter Art und Weise übersetzten Hydraulikdruck beaufschlagt. Der Hauptbremszylinder 4 ist vorliegend mit einem Hydraulikfluidbehälter bzw. mit einem Bremsflüssigkeitsbehälter 7 verbunden, welcher bei aus der Praxis bekannten Fahrzeugen im Motorraum angeordnet und über einen Einfüllstutzen 8 befüllbar ist, wobei in dem Bremsflüssigkeitsbehälter 8 im Wesentlichen Umgebungsdruck vorherrscht.

Stromab des Hauptbremszylinders 4 sind ein Umschaltventil V1 und ein Hochdruckschaltventil V2 in zueinander parallelen Leitungssträngen L1 und L2 angeordnet, so dass der vom Hauptbremszylinder 4 ausgehende Hydraulikfluidvolumenstrom im ersten Druckkreis 2 wahlweise über das Umschaltventil V1 oder das Hauptdruckschaltventil V2 in Richtung von Radbremszylindern RB1 und RB2 führbar ist.

Des Weiteren ist stromab des Umschaltventils V1 ein Leitungsverzweigungspunkt ZP1 des Druckkreises 2 vorgesehen, welchem zwei als Umschaltventile ausgeführte Radeinlassventile V3 und V4 nachgeschaltet sind. Die Radeinlassventile V3 und V4 sowie das Umschaltventil V1 sind als stromlos offene Ventile ausgeführt, so dass die Ventile V1, V3 und V4 im normalen Betrieb des Bremssystems 1, während dem die Ventile V1, V3 und V4 nicht mit ihren Steuerströmen beaufschlagt sind, geöffnet sind, um bei einer fahrerseitigen Betätigung des Bremspedals 5 eine verzögerungsfreie Bremsung durchführen zu können.

Zudem ist stromab des Hochdruckschaltventils V2 ein Leitungsverzweigungspunkt ZP2 des Stromkreises 2 vorgesehen, welcher mit zwei Radauslassventilen V5 und V6 in Verbindung steht, die im Bereich zweier weiterer Verzweigungspunkte ZP3 und ZP4 von zwischen den Radeinlassventilen V3 und V4 und den Radbremszylindern RB1 und RB2 verlaufenden Zuleitungen L3 und L4 mit den Steuerdrücken der Radbremszylinder RB1 und RB2 beaufschlagt werden.

Die Radauslassventile V5 und V6 sind als stromlos geschlossene Ventile ausgeführt, so dass ein fahrerseitig angeforderter Druckaufbau in den Radbremszylindern RB1 und RB2 im normalen Bremsbetrieb des Bremssystems 1 sicher gewährleistet ist.

Vor dem Umschaltventil V1 zweigt eine mit einem Rückschlagventil RV1 ausgeführte Bypassleitung BL1 ab, so dass bei einer Fehlfunktion des Umschaltventils V1, bei der die hydraulische Verbindung zwischen dem Hauptbremszylinder 4 und den Radbremszylindern RB1 und RB2 durch das Umschaltventil V1 unterbrochen ist, über die Bypassleitung BL1 weiterhin zur Verfügung steht und auch bei einem Ausfall des Umschaltventils V1 eine angeforderte Bremsung durchgeführt wird.

Wird über entsprechende Einrichtungen ermittelt, dass das von dem Radbremszylinder RB1 oder dem Radbremszylinder RB2 angesteuerte Rad des Fahrzeuges in unerwünschter Art und Weise blockiert, wird die Druckzufuhr des Radbremszylinders RB1 oder des Radbremszylinders RB2 im Bereich des Radeinlassventils V3 oder des Radeinlassventils V4 durch eine entsprechende Bestromung der elektromagnetischen Betätigungseinheit des betreffenden Ventils gesperrt und das mit dem jeweiligen Radbremszylinder RB1 bzw. RB2 korrespondierende Radauslassventil V5 bzw. V6 derart angesteuert, dass der Druck im Radbremszylinder RB1 oder im Radbremszylinder RB2 um einen erforderlichen Betrag reduziert und die Blockade des Rades aufgehoben ist.

Bei geöffneten Radauslassventilen V5 und V6 wird das über diese beiden Ventile geführte Hydraulikfluid in Richtung einer Saugseite eines vorliegend als Einkolbenpumpe ausgeführten Verdrängerelementes 10 zugeführt. In einer Verbindungsleitung L5 zwischen den Radauslassventilen V5 und V6 sowie dem Verdrängerelement 10, das eine Konstantpumpe bzw. eine Fördereinrichtung mit einem konstanten Verdrängervolumen darstellt, ist ein Rückschlagventil RV2 angeordnet, so dass lediglich Hydraulikfluid von den Radauslassventilen V5 und V6 in Richtung des Verdrängerelementes 10 führbar ist.

Darüber hinaus besteht auch die Möglichkeit, die Radeinlassventile V3 und V4 bei geschlossenen Radauslassventilen V5 und V6 zu sperren, um eine unerwünschte oder unzulässige Druckerhöhung im Bereich der Radbremszylinder RB1 und RB2 zu vermeiden.

Zwischen dem zweiten Rückschlagventil RV2 und dem Verdrängerelement 10 mündet der in stromlosem Zustand des Hochdruckschaltventils V2 von diesem gesperrte Leitungsstrang L2 auf der Saugseite des Verdrängerelementes 10 in die Verbindungsleitung L5. Damit ist der von dem Hauptbremszylinder 4 in den ersten Druckkreis 2 eingespeiste Hydraulikfluidvolumenstrom bei entsprechender Bestromung des Hochdruckschaltventils V2 und bei gleichzeitig geschlossenem Umschaltventil V1 zwischen dem zweiten Rückschlagventil RV2 und dem Verdrängerelement 10 der Saugseite des Verdrängerelementes 10 zuführbar und der Druck im Bereich der Radbremszylinder RB1 und RB2 bedarfsweise durch zusätzliche Verdichtungsarbeit gegenüber dem vom Bremskraftverstärker ausgehenden Druck aktiv veränderbar.

Das bedeutet, dass die beiden Radbremszylinder RB1 und RB2 bei geschlossenem Umschaltventil V1 mit der Druckseite des Verdrängerelementes 10 bei gleichzeitig geöffneten Radeinlassventilen V3 und V4 fluidisch verbunden sind und der vom Hauptbremszylinder 4 ausgehende Hydraulikdruck im Bereich des Verdrängerelementes 10 entsprechend eines rotatorischen Antriebes eines Elektromotors 11 in angeforderter Art und Weise auf einen Druckwert angehoben wird, der zur Darstellung verschiedener komfortorientierter Funktionen des Bremssystems 1 benötigt wird.

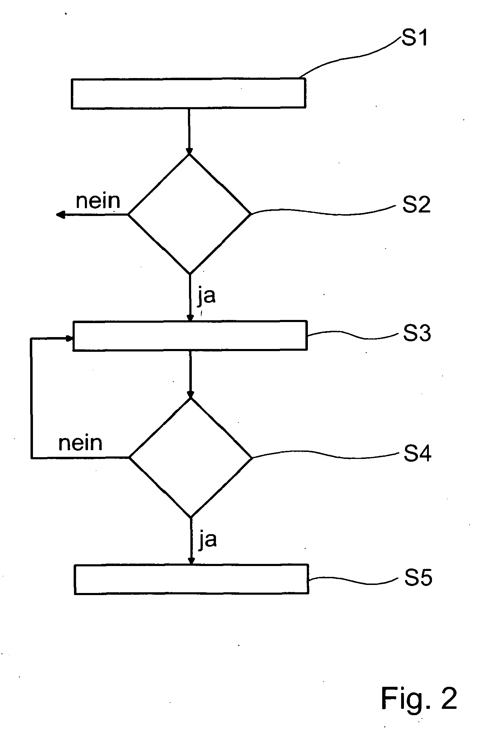

In Figur 2 ist ein stark verkürzt dargestelltes Ablaufschema eines erfindungsgemäßen Verfahrens zum Betreiben eines Bremssystems, vorzugsweise des in Figur 1 dargestellten Bremssystems 1, für Kraftfahrzeuge mit elektrisch ansteuerbaren und mit Spulen ausgeführten Hydraulikventilen dargestellt.

Dabei wird das erfindungsgemäße Verfahren zunächst während eines Schrittes S1 gestartet, wenn ein Fahrer eines Kraftfahrzeuges die Zündung des Fahrzeuges einschaltet. Während eines sich an den ersten Schritt S1 anschließenden Abfrageschritts S2 wird eine Temperatur des im Bremssystem 1 befindlichen Hydraulikfluids oder ein hierzu äquivalenter Temperaturwert ermittelt und überprüft, ob der ermittelte Temperaturwert kleiner als ein vordefinierter Schwellwert der Hydraulikfluidtemperatur ist, wobei das erfindungsgemäße Verfahren bei negativem Abfrageergebnis des Abfrageschritts S2 abgebrochen wird.

Bei positivem Abfrageergebnis des Abfrageschritts S2 wird zu einem dritten Schritt S3 verzweigt, während dem Spulen verschiedener Hydraulikventile des Bremssystems 1 gemäß Figur 1 in der nachfolgend näher beschriebenen Art und Weise bestromt werden, um die Hydraulikfluidtemperatur derart anzuheben, dass die Viskosität des Hydraulikfluids bzw. der Bremsflüssigkeit in einer die Druckaufbaudynamik des Bremssystems 1 verbessernden Art und Weise im Bereich eines Hydroaggregats des Bremssystems erniedrigt wird und das Bremssystem 1 mit kürzeren Druckaufbaudynamikzeiten verbessert betrieben werden kann.

Dazu wird vorliegend ein definierter Satz von Hydraulikventilen des Bremssystems 1 bestromt, der beispielsweise das Umschaltventil V1, das Hochdruckschaltventil V2 sowie die Radeinlassventile V3 und V4 des ersten Druckkreises 2, der der Fahrzeughinterachse zugeordnet ist, umfasst. Zusätzlich können auch ein Umschaltventil V7 des zweiten Druckkreises 3 und ein Hochdruckschaltventil V8 des zweiten Druckkreises 3, der der Fahrzeugvorderachse zugeordnet ist, zur Erwärmung des Hydraulikfluids bestromt werden, so dass dem Hydraulikfluid auch in diesem Bereich des Bremssystems 1 thermische Energie zuführbar ist, ohne eine Bremsung im Bereich einer Fahrzeugvorderachse des Fahrzeuges zu behindern, da die Druckbeaufschlagung von den Rädern der Fahrzeugvorderachse zugeordneten Radbremszylindern RB3 und RB4 des Bremssystems 1 im Bereich des bestromten Hochdruckschaltventils V8 des zweiten Druckkreises 3 entsperrt ist. Selbstverständlich liegt es im Ermessen des Fachmannes in Abhängigkeit des jeweils vorliegenden Anwendungsfalles die Hydraulikventile des zweiten Druckkreises des Bremssystems, welcher zur Beaufschlagung der Radbremszylinder der Fahrzeugvorderachse vorgesehen sind, mit Stromwerten zu bestromen, die kleiner sind als Stromwerte, zu welchen die Hydraulikventile ihren stromlosen Schaltzustand ändern bzw. umschalten.

Die Bestromung der vorstehend aufgezählten Hydraulikventile des Bremssystems 1 erfolgt dabei mittels eines vordefinierten Strom- bzw. Spannungsprofils, wobei die Höhe der Bestromung der Hydraulikventile derart vorgesehen wird, dass die Hydraulikventile zumindest phasenweise ihre Schaltstellung ändern. D. h., dass stromlos geschlossene Hydraulikventile während der Beheizung des Hydraulikfluids wenigstens phasenweise geöffnet werden und stromlos offene Hydraulikventile wenigstens phasenweise geschlossen werden.

Die konzeptbedingte Bestromung der Hydraulikventile des Bremssystems 1 mit einen stromlosen Schaltzustand der Hydraulikventile verändernden Strömen führt vorteilhafterweise innerhalb kurzer Prozesszeiten zu Spulentemperaturen der Hydraulikventile, die in etwa einen linearen Anstieg der Temperatur des Hydraulikfluids bewirken.

Des Weiteren ist die Bestromung der Hydraulikventile während des Ablaufs des Verfahrens derart vorgegeben, dass bei definierter Umgebungstemperatur des Bremssystems eine vordefinierte, maximale Spulentemperatur der Spulen der bestromten Hydraulikventile nicht überschritten wird. Dadurch wird sichergestellt, dass keine zu hohen Temperaturen im Bereich der Ventilendstufen der Hydraulikventile auftreten, Beschädigungen der temperaturempfindlichen Bauteile des Bremssystems 1 vermieden werden und alle Funktionalitäten des Bremssystems 1 trotz der Erwärmung des Hydraulikfluids weiterhin in vollem Umfang zur Verfügung stehen.

Dabei ist es vorgesehen, dass das Hydraulikfluid des Bremssystems 1 über eine in Abhängigkeit einer eine Erwärmungsphase des Hydraulikfluids während des Abfrageschritts S2 auslösenden Hydraulikfluidtemperatur stehenden Heizprofils erwärmt wird, welches aus einer ersten Heizphase und einer sich daran anschließenden zweiten Heizphase besteht, wobei die Spulen der zu bestromenden Hydraulikventile des Bremssystems 1 während der ersten Heizphase derart bestromt werden, dass eine Spulentemperatur am Ende der ersten Heizphase jeweils einem vordefinierten Spulentemperaturwert entspricht, der während der zweiten Heizphase mittels einer geringeren Bestromung als während der ersten Heizphase der Spulen wenigstens annähernd gehalten wird.

Das bedeutet, dass die Hydraulikventile während der ersten Heizphase bzw. der Hochstromphase mit höheren Strömen bestromt werden und anschließend während der zweiten Heizphase mit kleineren Strömen bestromt werden, so dass die Hydraulikventile im Wesentlichen während der gesamten Erwärmungsphase des Hydraulikfluids dauerhaft bestromt werden, bis beispielsweise eine maximale Erwärmungszeit erreicht wird, nach deren Ablauf das Hydraulikfluid eine die Druckaufbaudynamik des Bremssystems 1 verbessernde Temperatur bzw. Viskosität aufweist.

Dabei sind erfindungsgemäß die Heizzeiten der ersten Heizphase sowie der zweiten Heizphase und die Höhe der den Spulen zugeführten Stromstärken applikativ bestimmt und werden aus einem im Steuergerät des Bremssystems 1 hinterlegten Kennfeld in Abhängigkeit der zum Start des erfindungsgemäßen Verfahrens vorliegenden Hydraulikfluidtemperatur ausgewählt. D. h., dass das Bremssystem 1 im Bereich seines Hydroaggregates mit einem Heizprofil mit Heizleistungen beheizt wird, mit welchen Beschädigungen von Bauteilen des Bremssystems 1 sicher vermieden werden.

Um das Hydraulikfluid jeweils mit einer maximalen Heizleistung erwärmen zu können, Können die den Spulen zugeführten Stromstärken sowohl während der ersten Heizphase bzw. der Hochstromphase als auch während der zweiten Heizphase bzw. der Beharrungsphase variieren, wobei es bei einer weiteren Variante des erfindungsgemäßen Verfahrens auch vorgesehen sein kann, dass die Stromstärken während der ersten Heizphase und/oder während der zweiten Heizphase wenigstens annähernd konstant gehalten werden.

Zusätzlich sind die Heizprofile auch derart festgelegt, dass an sich bekannte Funktionalitäten des Bremssystems 1 durch die Beheizung der Hydraulikventile nicht beeinträchtigt werden, da die durch die Erwärmung des Hydraulikfluids mit thermischer Energie beaufschlagten Bauteile des Bremssystems 1 unterhalb der für die Gewährleistung der Funktionen des Bremssystems 1 erforderlichen Temperaturen gehalten werden. An den dritten Schritt S3 schließt sich ein Abfrageschritt S4 an, während dem überprüft wird, ob ein oder mehrere Abbruchkriterien zum Beenden der Erwärmungsphase des Hydraulikfluids vorliegen. Bei negativem Abfrageergebnis des Abfrageschritts S4 wird zurück zum Schritt S3 verzweigt und die Ventile werden weiter bestromt.

Bei positivem Abfrageergebnis des Abfrageschritts S4 wird die Erwärmungsphase des Hydraulikfluids durch Abschalten der Bestromung der Ventile des Bremssystems 1 während eines Schritts S5 abgebrochen.

Dabei wird während des Abfrageschritts S4 unter anderem überprüft, ob eine vordefinierte maximale Heizzeit überschritten ist.

Kriterien, die zur Unterbrechung der Erwärmungsphase des Hydraulikfluids führen, sind das Erkennen einer sogenannten Unterspannung eines elektrischen Fahrzeugbordnetzes, die Ermittlung eines unplausiblen Hydraulikdrucks in den Druckkreisen 2 und 3 des Bremssystems 1 sowie das Vorliegen einer unplausiblen Verzögerung des Fahrzeugs.

So wird beispielsweise im Betrieb des Fahrzeugs an Klemmen des Steuergeräts des Bremssystems eine Versorgungsspannung eines Bordnetzes des Fahrzeugs ermittelt und bei Unterschreiten eines vordefinierten Schwellwerts die Bestromung der Hydraulikventile unterbrochen, um die elektrische Versorgung weiterer Verbraucher durch das Bordnetz nicht zu gefährden bzw. nicht zu beeinträchtigen.

Der Druck im Bremssystem 1 während der Erwärmung des Hydraulikfluids wird unter anderem deshalb überprüft, da die zum Erwärmen des Hydraulikfluids bestromten Hydraulikventile von ihrem stromlosen Schaltzustand umgeschaltet werden und sich zwischen den dann geschlossenen Radeinlassventilen V3 und V4 sowie den Radbremszylindern RB1 und RB2 Druckwerte aufbauen können, die zu einem Anlegen von Bremsbelägen an Bremstrommeln oder Bremsscheiben des Bremssystems 1 und eventuell daraus resultierenden Bremsleistungen führen, die jedoch nicht erwünscht ist.

Generell wird das erfindungsgemäße Verfahren in jeder beliebigen Prozessstufe unterbrochen, wenn eine fahrerseitige Anforderung für eine Bremsung oder ein vollaktiver Eingriff des Bremssystems 1 erfolgt. Damit wird sichergestellt, dass die an sich bekannte Funktionalität des Bremssystems 1 durch die erfindungsgemäße Vorgehensweise nicht beeinträchtigt wird. Eine fahrerseitig angeforderte Bremsung wird vorliegend vorzugsweise in Abhängigkeit eines Drucksignals eines Drucksensors des Hauptdruckzylinders 4 des Bremssystems 1 oder eines Status einer dem Bremspedal 5 oder einem Bremslichtschalter zugeordneten Sensoreinrichtung in nicht näher dargestellter Art und Weise ermittelt.

Das vorbeschriebene erfindungsgemäße Verfahren ist auf einfache Art und Weise zu Verbesserung einer Druckaufbaudynamik bei ungünstigen Betriebstemperaturen des Hydraulikfluids in allen Bremssystemen, insbesondere in konventionellen Rückförderhydrauliken, wie beispielsweise ESP-Aggregaten, einsetzbar und mit nur geringem Aufwand in bestehende Bremssysteme implementierbar.

## Patentansprüche

1. Verfahren zum Betreiben eines Bremssystems (1) für Kraftfahrzeuge mit elektrisch ansteuerbaren Hydraulikventilen (V1 bis V8), die mit Spulen ausgeführt sind, von denen wenigstens eine Spule zur Erwärmung des im Bremssystem (1) befindlichen Hydraulikfluids wenigstens phasenweise mit einem den stromlosen Schaltzustand des Hydraulikventils (V1 bis V8) verändernden Strom bestromt wird, wobei die Erwärmung des Hydraulikfluids durch die spulenseitige Bestromung bei Vorliegen einer Hydraulikfluidtemperatur kleiner als ein Schwellwert gestartet wird, wobei das Hydraulikfluid in einer Erwärmungsphase über ein in Abhängigkeit einer die Erwärmungsphase des Hydraulikfluids auslösenden Hydraulikfluidtemperatur stehendes Heizprofil erwärmt wird, welches aus einer ersten Heizphase und einer sich daran anschließenden zweiten Heizphase besteht, wobei wenigstens eine Spule während der ersten Heizphase derart bestromt wird, dass eine Spulentemperatur am Ende der ersten Heizphase jeweils einem vordefinierten Spulentemperaturwert entspricht, der während der zweiten Heizphase mittels einer Bestromung der Spule wenigstens annähernd gehalten wird **dadurch gekennzeichnet, dass** die Heizzeiten der ersten Heizphase sowie der zweiten Heizphase und die Höhe der den Spulen zugeführten Stromstärken applikativ bestimmt sind und aus einem im Steuergerät des Bremssystems (1) hinterlegten Kennfeld in Abhängigkeit der zum Start des Verfahrens vorliegenden Hydraulikfluidtemperatur ausgewählt werden.

2. Verfahren nach Anspruch 1, **dadurch gekennzeichnet, dass** der Spulentemperaturwert in Abhängigkeit einer Umgebungstemperatur des Bremssystems (1) vordefiniert ist.

3. Verfahren nach Anspruch 1 oder 2, **dadurch gekennzeichnet, dass** die Stromstärken
während der ersten Heizphase und/oder während der zweiten Heizphase variieren.

4. Verfahren nach einem der Ansprüche 1 bis 3, **dadurch gekennzeichnet, dass** die Erwärmungsphase nach Ablauf einer maximalen Heizzeit beendet wird.

5. Verfahren nach einem der Ansprüche 1 bis 4, **dadurch gekennzeichnet, dass** die Erwärmungsphase des Hydraulikfluids bei Erkennen eines für einen aktuellen Betriebszustand des Bremssystems (1) unplausiblen Drucks im Bremssystem (1) unterbrochen wird.

6. Verfahren nach einem der Ansprüche 1 bis 4, **dadurch gekennzeichnet, dass** die Erwärmungsphase des Hydraulikfluids bei Unterschreiten eines Schwellwertes einer Versorgungsspannung eines elektrischen Bordnetzes des Kraftfahrzeugs unterbrochen wird.

7. Verfahren nach einem der Ansprüche 1 bis 4, **dadurch gekennzeichnet, dass** die Erwärmungsphase des Hydraulikfluids bei Erkennen einer Bremsung unterbrochen wird, die fahrerseitig und/oder bremssystemseitig angefordert ist.

8. Verfahren nach Anspruch 7, **dadurch gekennzeichnet, dass** eine fahrerseitig angeforderte Bremsung in Abhängigkeit eines Signals einer Sensoreinrichtung ermittelt wird.

9. Verfahren nach einem der Ansprüche 5 bis 8, **dadurch gekennzeichnet, dass** beim Beenden der Erwärmungsphase des Hydraulikfluids eine Bestromung der Hydraulikventile abgeschaltet wird.

10. Verfahren nach einem der Ansprüche 1 bis 9, **dadurch gekennzeichnet, dass** das Bremssystem (1) zwei Druckkreise (2, 3) aufweist, die mit Hydraulikventilen (V1 bis V8) ausgebildet sind, wobei zum Erwärmen des Hydraulikfluides jeweils wenigstens ein Hydraulikventil (V1 bis V8) der Druckkreise (2, 3) bestromt werden.

## Claims

1. Method for operating a brake system (1) for motor vehicles with electrically activatable hydraulic valves (V1 to V8) which are designed with coils, to at least one coil of which is applied, at least in phases, a current varying the currentless switching state of the hydraulic valve (V1 to V8), for the purpose of heating the hydraulic fluid located in the brake system (1), the heating of the hydraulic fluid being started by the application of current to the coil when a hydraulic fluid temperature lower than a threshold value is present, in a heating phase the hydraulic fluid being heated over a heating profile which is dependent on a hydraulic fluid temperature triggering the heating phase of the hydraulic fluid, which heating profile consists of a first heating phase and of a second heating phase following the latter, current being applied to at least one coil during the first heating phase in such a way that a coil temperature at the end of the first heating phase corresponds in each case to a predefined coil temperature value which is maintained at least approximately during the second heating phase by means of application of current to the coil, **characterized in that** the heating times of the first heating phase and of the second heating phase and the magnitude of the current intensities supplied to the coils are determined by application and are selected from a characteristic map, stored in the control apparatus of the brake system (1), in dependence on the hydraulic fluid temperature present at the start of the method.

2. Method according to Claim 1, **characterized in that** the coil temperature value is predefined in dependence on an ambient temperature of the brake system (1).

3. Method according to Claim 1 or 2, **characterized in that** the current intensities during the first heating phase and/or during the second heating phase vary.

4. Method according to one of Claims 1 to 3, **characterized in that** the heating phase is terminated after the expiry of a maximum heating time.

5. Method according to one of Claims 1 to 4, **characterized in that** the heating phase of the hydraulic fluid is interrupted when a pressure implausible for a current operating state of the brake system (1) is detected in the brake system (1).

6. Method according to one of Claims 1 to 4, **characterized in that** the heating phase of the hydraulic fluid is interrupted when a threshold value of a supply voltage of an electrical power supply of the motor vehicle is undershot.

7. Method according to one of Claims 1 to 4, **characterized in that** the heating phase of the hydraulic fluid is interrupted when braking required on the driver side and/or the brake system side is detected.

8. Method according to Claim 7, **characterized in that** braking required on the driver side is determined in dependence on a signal from a sensor device.

9. Method according to one of Claims 5 to 8, **characterized in that**, when the heating phase of the hydraulic fluid is terminated, application of current to the hydraulic valves is switched off.

10. Method according to one of Claims 1 to 9, **characterized in that** the brake system (1) has two pressure circuits (2, 3) which are designed with hydraulic valves (V1 to V8), current being applied in each case to at least one hydraulic valve (V1 to V8) of the pressure circuits (2, 3) for the purpose of heating the hydraulic fluid.

## Revendications

1. Procédé pour faire fonctionner un système de freinage (1) pour véhicules automobiles, comprenant des soupapes hydrauliques à commande électrique (V1 à V8), qui sont réalisées avec des bobines dont au moins une bobine est alimentée au moins par phases en courant modifiant l'état de commutation non alimenté en courant de la soupape hydraulique (V1 à V8) pour chauffer le fluide hydraulique se trouvant dans le système de freinage (1), le chauffage du fluide hydraulique étant commencé par l'alimentation en courant du côté de la bobine en présence d'une température de fluide hydraulique inférieure à une valeur seuil, le fluide hydraulique étant chauffé dans une phase de chauffage par le biais d'un profil de chauffage dépendant d'une température de fluide hydraulique déclenchant la phase de chauffage du fluide hydraulique, lequel profil de chauffage se compose d'une première phase de chauffage et d'une deuxième phase de chauffage subséquente, au moins une bobine étant alimentée en courant pendant la première phase de chauffage de telle sorte qu'une température de bobine à la fin de la première phase de chauffage corresponde à chaque fois à une valeur de température de bobine prédéfinie, qui est maintenue pendant la deuxième phase de chauffage au moins approximativement au moyen d'une alimentation en courant de la bobine, **caractérisé en ce que** les temps de chauffage de la première phase de chauffage ainsi que de la deuxième phase de chauffage et l'amplitude des intensités du courant acheminé aux bobines sont déterminés par application pratique et sont sélectionnés à partir d'un champ caractéristique stocké dans l'appareil de commande du système de freinage (1) en fonction de la température du fluide hydraulique au début du procédé.

2. Procédé selon la revendication 1, **caractérisé en ce que** la valeur de la température des bobines est prédéfinie en fonction d'une température environnante du système de freinage (1).

3. Procédé selon la revendication 1 ou 2, **caractérisé en ce que** les intensités du courant varient pendant la première phase de chauffage et/ou pendant la deuxième phase de chauffage.

4. Procédé selon l'une quelconque des revendications 1 à 3, **caractérisé en ce que** la phase de chauffage est terminée à la fin d'un temps de chauffage maximal.

5. Procédé selon l'une quelconque des revendications 1 à 4, **caractérisé en ce que** la phase de chauffage du fluide hydraulique est interrompue dans le système de freinage (1) à la détection d'une pression non plausible pour un état de fonctionnement actuel du système de freinage (1).

6. Procédé selon l'une quelconque des revendications 1 à 4, **caractérisé en ce que** la phase de chauffage du fluide hydraulique est interrompue en dessous d'une valeur seuil d'une tension d'alimentation d'un réseau de bord électrique du véhicule automobile.

7. Procédé selon l'une quelconque des revendications 1 à 4, **caractérisé en ce que** la phase de chauffage du fluide hydraulique est interrompue à la détection d'un freinage qui est demandé par le conducteur et/ou le système de freinage.

8. Procédé selon la revendication 7, **caractérisé en ce qu'**un freinage demandé par le conducteur est déterminé en fonction d'un signal d'un dispositif de capteur.

9. Procédé selon l'une quelconque des revendications 5 à 8, **caractérisé en ce qu'**à la fin de la phase de freinage du fluide hydraulique, l'alimentation en courant des soupapes hydrauliques est coupée.

10. Procédé selon l'une quelconque des revendications 1 à 9, **caractérisé en ce que** le système de freinage (1) présente deux circuits de pression (2, 3) qui sont réalisés avec des soupapes hydrauliques (V1 à V8), au moins une soupape hydraulique (V1 à V8) des circuits de pression (2, 3) étant à chaque fois alimentée en courant pour chauffer le fluide hydraulique.
